(19) Europäisches Patentamt

European Patent Office

Office européen des brevets

(11) EP 4 253 440 A1

(12) EUROPEAN PATENT APPLICATION
published in accordance with Art. 153(4) EPC

(43) Date of publication:
04.10.2023 Bulletin 2023/40

(21) Application number: 21898170.2

(22) Date of filing: 29.11.2021

(51) International Patent Classification (IPC):
C08F 287/00 (2006.01)          C08L 53/02 (2006.01)
H01M 4/13 (2010.01)          H01M 4/139 (2010.01)
H01M 4/62 (2006.01)          H01M 10/0566 (2010.01)

(52) Cooperative Patent Classification (CPC):
C08F 287/00; C08L 53/02; H01M 4/13;
H01M 4/139; H01M 4/62; H01M 10/0566;
Y02E 60/10

(86) International application number:
PCT/JP2021/043707

(87) International publication number:
WO 2022/114199 (02.06.2022 Gazette 2022/22)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 30.11.2020 JP 2020198965

(71) Applicant: Zeon Corporation
Tokyo 100-8246 (JP)

(72) Inventors:
• OSHIMA Hiroki
Tokyo 100-8246 (JP)
• SONO Masayo
Tokyo 100-8246 (JP)

(74) Representative: Maiwald GmbH
Elisenhof
Elisenstraße 3
80335 München (DE)

(54) **BINDER COMPOSITION FOR NON-AQUEOUS SECONDARY BATTERY ELECTRODE, SLURRY COMPOSITION FOR NON-AQUEOUS SECONDARY BATTERY ELECTRODE, ELECTRODE FOR NON-AQUEOUS SECONDARY BATTERY, AND NON-AQUEOUS SECONDARY BATTERY**

(57) A binder composition for a non-aqueous secondary battery electrode contains water and a polymer that includes an aromatic vinyl monomer unit, a conjugated diene monomer unit, and a hydrophilic monomer unit. The polymer has a median diameter of not less than 50 nm and not more than 800 nm, and the proportional content of the hydrophilic monomer unit in the polymer is not less than 4.0 mass% and not more than 20 mass%. Moreover, the polymer has a loss tangent tan $\delta$ of not less than 0.001 and less than 0.40 and a loss modulus G" of 1,600 kPa or less.

EP 4 253 440 A1

**Description**

TECHNICAL FIELD

The present disclosure relates to a binder composition for a non-aqueous secondary battery electrode, a slurry composition for a non-aqueous secondary battery electrode, an electrode for a non-aqueous secondary battery, and a non-aqueous secondary battery.

BACKGROUND

Non-aqueous secondary batteries (hereinafter, also referred to simply as "secondary batteries") such as lithium ion secondary batteries have characteristics such as compact size, light weight, high energy density, and the ability to be repeatedly charged and discharged, and are used in a wide variety of applications. Consequently, in recent years, studies have been made to improve battery members such as electrodes for the purpose of achieving even higher non-aqueous secondary battery performance.

An electrode used in a secondary battery such as a lithium ion secondary battery normally includes a current collector and an electrode mixed material layer (positive electrode mixed material layer or negative electrode mixed material layer) formed on the current collector. This electrode mixed material layer is formed by, for example, applying a slurry composition containing an electrode active material, a binder-containing binder composition, and so forth onto the current collector, and then drying the applied slurry composition.

In order to further improve the performance of secondary batteries, attempts have been made in recent years to improve binder compositions used in electrode mixed material layer formation. As one specific example, Patent Literature (PTL) 1 proposes an aqueous binder composition for a battery electrode containing a copolymer latex, a feature of which is that with regards to dynamic viscoelasticity of a film, the copolymer latex has a curve on which, when the maximum peak temperature of a loss coefficient tan $\delta$ is taken to be Tp (°C), Tp is present within a range of -20°C to 60°C, tan $\delta$ (Tp) thereof is present within a range of $4.0 \times 10^{-1}$ to $1.0 \times 10^{0}$, and a temperature range in which tan $\delta$ is 60% or more of tan $\delta$ (Tp) is 35°C or more. The copolymer contained in this binder composition is obtained through emulsion polymerization of a monomer composition containing 12 mass% to 50 mass% of an aliphatic conjugated diene monomer, 1.0 mass% to 10 mass% of a carboxylic acid alkyl ester monomer, 0.1 mass% to 10 mass% of an ethylenically unsaturated carboxylic acid monomer, and 30 mass% to 86.9 mass% of monomers that are copolymerizable with these monomers. This binder composition has high binding capacity even when used in a wide range of environment temperatures and can preserve electrode structure during charging and discharging.

CITATION LIST

Patent Literature

PTL 1: JP2017-126456A

SUMMARY

(Technical Problem)

From a viewpoint of increasing secondary battery producibility, it is necessary for a binder composition to have a polymer uniformly dispersed therein even after stationary storage for a certain period after production. Moreover, in an electrode formed using a binder composition, it is necessary for a mixed material layer and a current collector that are constituents of the electrode to be bound with high binding strength even at high temperature in a production process of a secondary battery. In other words, it is necessary for a binder composition to enable formation of an electrode that displays high peel strength even upon exposure to high temperature. Furthermore, it is preferable that a secondary battery including an electrode formed using a binder composition has low internal resistance.

However, it has not been possible to simultaneously achieve uniformity of a polymer in a binder composition after stationary storage (hereinafter, also referred to as "stationary stability"), increased peel strength of an electrode after exposure to high temperature, and reduced internal resistance of an obtained secondary battery to sufficiently high levels with the conventional binder described above.

Accordingly, one object of the present disclosure is to provide a binder composition for a non-aqueous secondary battery electrode that has excellent stationary stability and can form an electrode having excellent peel strength after exposure to high temperature and a non-aqueous secondary battery having low internal resistance.

Another object of the present disclosure is to provide a slurry composition for a non-aqueous secondary battery electrode that can form an electrode having excellent peel strength after exposure to high temperature and a non-aqueous secondary battery having low internal resistance.

Yet another object of the present disclosure is to provide an electrode for a non-aqueous secondary battery that has excellent peel strength after exposure to high temperature and can form a secondary battery having low internal resistance and also to provide a non-aqueous secondary battery that has low internal resistance.

(Solution to Problem)

The inventors conducted diligent investigation with the aim of solving the problems set forth above. The inventors discovered that when a binder composition contains a polymer that satisfies a specific chemical composition and median diameter and that has a loss tangent tan $\delta$ and loss modulus G" within specific ranges as measured by a specific method, this binder composition has excellent stationary stability and can be used to obtain an electrode having excellent peel strength after exposure to high temperature and a secondary battery having low internal resistance. In this manner, the inventors completed the present disclosure.

Specifically, the present disclosure aims to advantageously solve the problems set forth above, and a presently disclosed binder composition for a non-aqueous secondary battery electrode comprises: a polymer including an aromatic vinyl monomer unit, a conjugated diene monomer unit, and a hydrophilic monomer unit; and water, wherein the polymer has a median diameter of not less than 50 nm and not more than 800 nm, proportional content of the hydrophilic monomer unit in the polymer is not less than 4.0 mass% and not more than 20 mass%, and the polymer has a loss tangent tan $\delta$ of not less than 0.001 and less than 0.40 and a loss modulus G" of 1,600 kPa or less. The binder composition containing a polymer that satisfies a specific chemical composition and median diameter and that has a loss tangent tan $\delta$ and loss modulus G" within specific ranges as measured by a specific method in this manner has excellent stationary stability, and by using this binder composition, it is possible to obtain an electrode having excellent peel strength after exposure to high temperature and a secondary battery having low internal resistance.

Note that a "monomer unit" of a polymer referred to in the present disclosure is a "repeating unit derived from that monomer that is included in a polymer obtained using the monomer".

Also note that the "median diameter" of a polymer can be measured in accordance with a method described in the EXAMPLES section of the present specification.

Moreover, the proportional content of each type of monomer unit in a polymer can be measured by $^1$H-NMR.

Furthermore, the "loss tangent tan $\delta$" and "loss modulus G"" of a polymer can be measured in accordance with a method described in the EXAMPLES section of the present specification.

In the presently disclosed binder composition for a non-aqueous secondary battery electrode, the conjugated diene monomer unit included in the polymer is preferably a unit derived from 1,3-butadiene monomer. When the conjugated diene monomer unit included in the polymer is a unit derived from 1,3-butadiene monomer, it is possible to increase preservation stability of a slurry composition for a non-aqueous secondary battery electrode that is obtained using the binder composition for a non-aqueous secondary battery electrode. Moreover, through a binder composition containing a polymer that includes a unit derived from 1,3-butadiene monomer as a conjugated diene monomer unit, it is possible to form an electrode having even better peel strength after exposure to high temperature.

In the presently disclosed binder composition for a non-aqueous secondary battery electrode, gel content measured when the polymer is immersed in tetrahydrofuran is preferably not less than 35 mass% and not more than 60 mass%. Through the gel content measured when the polymer is immersed in tetrahydrofuran being not less than 35% and not more than 60%, it is possible to appropriately control initial viscosity in production of a slurry composition using the binder composition and to further enhance battery characteristics of a secondary battery that is ultimately obtained.

Note that the "gel content" of a polymer can be measured in accordance with a method described in the EXAMPLES section of the present specification.

In the presently disclosed binder composition for a non-aqueous secondary battery electrode, the polymer preferably includes an aromatic vinyl block region formed of aromatic vinyl monomer units. Through the binder composition containing a polymer that includes an aromatic vinyl block region formed of aromatic vinyl monomer units, it is possible to obtain an electrode having even better peel strength after exposure to high temperature and a secondary battery having even lower internal resistance by using this binder composition. When a polymer is said to "include a block region formed of monomer units" in the present specification, this means that "a section where only such monomer units are bonded in a row as repeating units is present in the polymer".

Moreover, the present disclosure aims to advantageously solve the problems set forth above, and a presently disclosed slurry composition for a non-aqueous secondary battery electrode comprises: an electrode active material; and any one of the binder compositions for a non-aqueous secondary battery electrode set forth above. When a slurry composition contains the binder composition for a non-aqueous secondary battery electrode set forth above in this manner, it is possible to improve peel strength after exposure to high temperature (hereinafter, also referred to as "high-

**EP 4 253 440 A1**

temperature peel strength") of an electrode formed using the slurry composition and to reduce internal resistance of a secondary battery.

Furthermore, the present disclosure aims to advantageously solve the problems set forth above, and a presently disclosed electrode for a non-aqueous secondary battery comprises an electrode mixed material layer formed using the slurry composition for a non-aqueous secondary battery electrode set forth above. By using the slurry composition for a non-aqueous secondary battery electrode set forth above in this manner, it is possible to obtain an electrode that has excellent high-temperature peel strength and can form a secondary battery having low internal resistance.

Also, the present disclosure aims to advantageously solve the problems set forth above, and a presently disclosed non-aqueous secondary battery comprises a positive electrode, a negative electrode, a separator, and an electrolyte solution, wherein at least one of the positive electrode and the negative electrode is the electrode for a non-aqueous secondary battery set forth above. By using the electrode for a non-aqueous secondary battery set forth above, it is possible to obtain a non-aqueous secondary battery having low internal resistance.

(Advantageous Effect)

According to the present disclosure, it is possible to provide a binder composition for a non-aqueous secondary battery electrode that has excellent stationary stability and can form an electrode having excellent peel strength after exposure to high temperature and a non-aqueous secondary battery having low internal resistance.

Moreover, according to the present disclosure, it is possible to provide a slurry composition for a non-aqueous secondary battery electrode that can form an electrode having excellent peel strength after exposure to high temperature and a non-aqueous secondary battery having low internal resistance.

Furthermore, according to the present disclosure, it is possible to provide an electrode for a non-aqueous secondary battery that has excellent peel strength after exposure to high temperature and can form a secondary battery having low internal resistance and also to provide a non-aqueous secondary battery that has low internal resistance.

DETAILED DESCRIPTION

The following provides a detailed description of embodiments of the present disclosure.

The presently disclosed binder composition for a non-aqueous secondary battery electrode can be used in production of the presently disclosed slurry composition for a non-aqueous secondary battery electrode. Moreover, a slurry composition for a non-aqueous secondary battery electrode that is produced using the presently disclosed binder composition for a non-aqueous secondary battery electrode can be used in production of an electrode of a non-aqueous secondary battery such as a lithium ion secondary battery. Furthermore, a feature of the presently disclosed non-aqueous secondary battery is that the presently disclosed electrode for a non-aqueous secondary battery, which is formed using the presently disclosed slurry composition for a non-aqueous secondary battery electrode, is used therein.

Note that the presently disclosed binder composition for a non-aqueous secondary battery electrode, slurry composition for a non-aqueous secondary battery electrode, and electrode for a non-aqueous secondary battery are preferably for a negative electrode, and the presently disclosed non-aqueous secondary battery is preferably a non-aqueous secondary battery in which the presently disclosed electrode for a non-aqueous secondary battery is used as a negative electrode.

(Binder composition for non-aqueous secondary battery electrode)

The presently disclosed binder composition for a non-aqueous secondary battery electrode contains water and a polymer that includes an aromatic vinyl monomer unit, a conjugated diene monomer unit, and a hydrophilic monomer unit. Moreover, features of the polymer are that the median diameter of the polymer is not less than 50 nm and not more than 800 nm and that the proportional content of hydrophilic monomer units in the polymer is not less than 4.0 mass% and not more than 20 mass%. Furthermore, features of the polymer are that the polymer has a loss tangent tan $\delta$ of not less than 0.001 and less than 0.40 and a loss modulus G" of 1,600 kPa or less as measured in accordance with a method subsequently described in the EXAMPLES section.

As a result of the polymer satisfying a specific chemical composition and median diameter and having a loss tangent tan $\delta$ and loss modulus G" within specific ranges as measured by a specific method, the presently disclosed binder composition has excellent stationary stability and can be used to form an electrode having excellent peel strength after exposure to high temperature and a secondary battery having low internal resistance.

<Polymer>

The polymer is a component that functions as a binder and that holds components such as an electrode active

4

material in an electrode mixed material layer formed using a slurry composition containing the binder composition so as to prevent detachment of these components from the electrode mixed material layer.

Moreover, the polymer is water-insoluble particles. Note that when particles of a polymer are referred to as "water-insoluble" in the present disclosure, this means that when 0.5 g of the polymer is dissolved in 100 g of water at a temperature of 25°C, insoluble content is 90 mass% or more.

<<Median diameter of polymer>>

The median diameter of the polymer is required to be not less than 50 nm and not more than 800 nm. Moreover, the median diameter of the polymer is preferably 100 nm or more, and more preferably 200 nm or more, and is preferably 500 nm or less. When the median diameter of the polymer is not less than any of the lower limits set forth above, high-temperature peel strength of an obtained electrode can be improved, and internal resistance of an obtained secondary battery can be reduced. Moreover, when the median diameter of the polymer is not more than any of the upper limits set forth above, stationary stability of the binder composition can be increased.

The median diameter of the polymer can be controlled by altering conditions in production of the polymer or by performing a classification step of centrifugal separation, filtration, or the like with respect to a polymerized product satisfying an arbitrary particle diameter distribution, but is not specifically limited to being controlled in this manner. For example, in a subsequently described production method that includes a step of performing phase-inversion emulsification and graft polymerization with respect to polymer particles each constituting a core, the median diameter of the polymer can be increased by increasing the concentration of the polymer particles in phase-inversion emulsification, subjecting polymer particles having a large molecular weight to phase-inversion emulsification, and so forth.

<<Loss tangent tan $\delta$ of polymer>>

The loss tangent tan $\delta$ of the polymer is required to be not less than 0.001 and less than 0.40, and is preferably 0.37 or less. When the loss tangent tan $\delta$ is within any of the ranges set forth above, high-temperature peel strength can be increased. Note that the loss tangent tan $\delta$ of the polymer can be adjusted based on the chemical composition of the polymer, production conditions of the polymer, and so forth. For example, the loss tangent tan $\delta$ can be increased by increasing the proportional content of aromatic vinyl monomer units in the polymer. Moreover, the loss tangent tan $\delta$ can be controlled by altering additives compounded in production of the polymer, for example.

Note that a loss tangent tan $\delta$ of not less than 0.001 and not more than 0.80 for the polymer is preferable from a viewpoint of improving pressability of an obtained electrode. When an electrode has good pressability, this more specifically means that the amount of spring-back and rate of density change of the electrode after pressing are small, and that an electrode mixed material layer has excellent close adherence and has a low tendency to peel from an electrode substrate after pressing of the electrode.

<<Loss modulus G" of polymer>>

The loss modulus G" of the polymer is required to be 1,600 kPa or less, and is preferably 1,000 kPa or less. When the loss modulus G" is not more than any of the upper limits set forth above, peel strength of an electrode can be improved. Note that besides peel strength after a produced electrode is exposed to high temperature (high-temperature peel strength) such as previously described, the peel strength of an electrode referred to here may be peel strength of a produced electrode before exposure to high temperature (i.e., peel strength of a produced electrode in that state, which is also referred to below as "normal peel strength"). When the loss modulus G" of the polymer is not more than any of the upper limits set forth above, it is possible to increase either or both of high-temperature peel strength and normal peel strength through balancing with other parameters such as the loss tangent tan $\delta$. Note that the loss modulus G" is normally 1 kPa or more, but is not specifically limited thereto.

Moreover, a loss modulus G" of 1,800 kPa or less is preferable from a viewpoint of improving pressability of an obtained electrode.

Note that the loss modulus G" of the polymer can be adjusted based on the chemical composition of the polymer, production conditions of the polymer, and so forth. For example, the loss modulus G" can be reduced by reducing the proportional content of aromatic vinyl monomer units in the polymer. Moreover, the loss modulus G" can be controlled by altering additives compounded in production of the polymer, for example.

<<Gel content of polymer>>

The gel content measured when the polymer is immersed in tetrahydrofuran is preferably not less than 35 mass% and not more than 60 mass%. When the gel content of the polymer is within this range, it is possible to control the initial viscosity of an obtained slurry composition to within an appropriate range. Moreover, when the gel content of the polymer is not less than the lower limit set forth above, thermal stability of the polymer increases, and high-temperature peel strength of an obtained electrode can be increased. Note that the gel content of the polymer can be adjusted based on the chemical composition of the polymer, production conditions of the polymer, and so forth. For example, the gel content of the polymer can be increased by raising the reaction temperature in a graft polymerization reaction, increasing the amount of initiator that is compounded, and so forth.

<<Chemical composition of polymer>>

The polymer is required to include an aromatic vinyl monomer unit, a conjugated diene monomer unit, and a hydrophilic monomer unit and may optionally include other monomer units that are copolymerizable with these monomer units. Moreover, from a viewpoint of enabling formation of an electrode having even better high-temperature peel strength and even further reducing internal resistance of an obtained secondary battery, it is preferable that the polymer includes an aromatic vinyl block region formed of aromatic vinyl monomer units. In other words, the polymer is preferably a block copolymer that includes block regions.

[Aromatic vinyl monomer unit]

Examples of aromatic vinyl monomers that can form an aromatic vinyl monomer unit include aromatic monovinyl compounds such as styrene, styrene sulfonic acid and salts thereof, $\alpha$-methylstyrene, p-t-butylstyrene, butoxystyrene, vinyltoluene, chlorostyrene, and vinylnaphthalene. Of these aromatic vinyl monomers, styrene and derivatives thereof are preferable. Although one of these aromatic vinyl monomers may be used individually or two or more of these aromatic vinyl monomers may be used in combination, it is preferable that one aromatic vinyl monomer is used individually.

Aromatic vinyl monomer units of the polymer preferably constitute an aromatic vinyl block region formed of aromatic vinyl monomer units. The aromatic vinyl block region is a region that only includes an aromatic vinyl monomer unit as a repeating unit. A single aromatic vinyl block region may be formed of just one type of aromatic vinyl monomer unit or may be formed of a plurality of types of aromatic vinyl monomer units, but is preferably formed of just one type of aromatic vinyl monomer unit. Moreover, a single aromatic vinyl block region may include a coupling moiety (i.e., aromatic vinyl monomer units forming a single aromatic vinyl block region may be linked via a coupling moiety). In a case in which the polymer includes a plurality of aromatic vinyl block regions, the types and proportions of aromatic vinyl monomer units forming these aromatic vinyl block regions may be the same or different for each of the aromatic vinyl block regions, but are preferably the same.

The proportion constituted by aromatic vinyl monomer units in the polymer when the amount of all repeating units (monomer units and structural units) in the polymer is taken to be 100 mass% is preferably 10 mass% or more, and more preferably 15 mass% or more, and is preferably 60 mass% or less, and more preferably 50 mass% or less. When the proportion constituted by aromatic vinyl monomer units in the polymer is not less than any of the lower limits set forth above, cycle characteristics of a secondary battery can be improved. On the other hand, when the proportion constituted by aromatic vinyl monomer units in the polymer is not more than any of the upper limits set forth above, flexibility of the polymer is ensured, and peel strength of an electrode can be further improved. Both high-temperature peel strength and normal peel strength can be increased when the polymer has appropriate flexibility.

Note that in a case in which aromatic vinyl monomer units included in the polymer form an aromatic vinyl block region, the proportion constituted by aromatic vinyl monomer units in the polymer normally matches the proportion constituted by the aromatic vinyl block region in the polymer.

[Conjugated diene monomer unit]

Examples of conjugated diene monomers that can form a conjugated diene monomer unit include conjugated diene compounds having a carbon number of 4 or more such as 1,3-butadiene, isoprene, 2,3-dimethyl-1,3-butadiene, and 1,3-pentadiene. Of these conjugated diene monomers, 1,3-butadiene and isoprene are preferable, and 1,3-butadiene is more preferable. Although one of these conjugated diene monomers may be used individually or two or more of these conjugated diene monomers may be used in combination, it is preferable that one conjugated diene monomer is used individually. This is because dispersion stability and thermal stability of the obtained polymer can be increased by using 1,3-butadiene to form a conjugated diene monomer unit of the polymer.

Conjugated diene monomer units of the polymer preferably constitute a conjugated diene block region formed of conjugated diene monomer units. The conjugated diene block region is a region that only includes a conjugated diene monomer unit as a repeating unit. A single conjugated diene block region may be formed of just one type of conjugated diene monomer unit or may be formed of a plurality of types of conjugated diene monomer units, but is preferably formed of just one type of conjugated diene monomer unit. Moreover, a single conjugated diene block region may include a coupling moiety (i.e., conjugated diene monomer units forming a single conjugated diene block region may be linked via a coupling moiety). In a case in which the polymer includes a plurality of conjugated diene block regions, the types and proportions of conjugated diene monomer units forming these conjugated diene block regions may be the same or different for each of the conjugated diene block regions, but are preferably the same.

The term "conjugated diene monomer unit" refers to a repeating unit that is derived from a conjugated diene monomer, but may be inclusive of either or both of a unit that is formed of a polymerized conjugated diene and a unit that is obtained through hydrogenation of a unit formed of a polymerized conjugated diene. The unit that is obtained through hydrogenation of a unit formed of a polymerized conjugated diene may be an alkylene structural unit. An alkylene structural unit is a repeating unit that is composed of only an alkylene structure represented by a general formula $-C_nH_{2n}-$ (n is an integer of 2 or more). Although the alkylene structural unit may be linear or branched, the alkylene structural unit is preferably linear (i.e., is preferably a linear alkylene structural unit). Moreover, the carbon number of the alkylene structural unit is preferably 4 or more (i.e., n in the preceding general formula is preferably an integer of 4 or more). The method by which the alkylene structural unit is introduced into the polymer is not specifically limited and may, for example, be a method involving hydrogenating the polymer. Hydrogenation of the polymer can be performed by a commonly known method such as oil-layer hydrogenation or water-layer hydrogenation.

The proportion constituted by conjugated diene monomer units in the polymer when the amount of all repeating units (monomer units and structural units) in the polymer is taken to be 100 mass% is preferably 40 mass% or more, and more preferably 50 mass% or more, and is preferably 80 mass% or less, and more preferably 75 mass% or less. When the proportion constituted by conjugated diene monomer units in the polymer is not less than any of the lower limits set forth above, high-temperature peel strength and normal peel strength of an electrode can both be even further improved. On the other hand, when the proportion constituted by conjugated diene monomer units in the polymer is not more than any of the upper limits set forth above, flexibility of the polymer is ensured, and cycle characteristics of a secondary battery can be further improved. Note that in a case in which conjugated diene monomer units included in the polymer form a conjugated diene block region, the proportion constituted by conjugated diene monomer units in the polymer normally matches the proportion constituted by the conjugated diene block region in the polymer. Moreover, in a case in which the polymer includes an alkylene structural unit, the total proportion constituted by alkylene structural units and non-hydrogenated conjugated diene monomer units preferably satisfies any of the preferred ranges set forth above.

[Hydrophilic monomer unit]

Examples of hydrophilic monomers that can form a hydrophilic monomer unit include, but are not specifically limited to, carboxyl group-containing monomers, sulfo group-containing monomers, phosphate group-containing monomers, hydroxy group-containing monomers, and reactive emulsifiers.

Examples of carboxyl group-containing monomers include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, and α-chloro-β-E-methoxyacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as butyl maleate, nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, dimethylmaleic anhydride, and citraconic anhydride.

Moreover, an acid anhydride that produces a carboxyl group through hydrolysis can also be used as a carboxyl group-containing monomer.

Furthermore, an ethylenically unsaturated polybasic carboxylic acid such as butene tricarboxylic acid, a partial ester of an ethylenically unsaturated polybasic carboxylic acid such as monobutyl fumarate or mono-2-hydroxypropyl maleate, or the like can be used as a carboxyl group-containing monomer.

Examples of sulfo group-containing monomers include styrene sulfonic acid, vinyl sulfonic acid (ethylene sulfonic acid), methyl vinyl sulfonic acid, (meth)allyl sulfonic acid, and 3-allyloxy-2-hydroxypropane sulfonic acid.

In the present disclosure, "(meth)allyl" is used to indicate "allyl" and/or "methallyl".

Examples of phosphate group-containing monomers include 2-(meth)acryl oyl oxyethyl phosphate, methyl-2-(meth)acryloyloxyethyl phosphate, and ethyl-(meth)acryloyloxyethyl phosphate.

In the present disclosure, "(meth)acryloyl" is used to indicate "acryloyl" and/or "methacryloyl".

Examples of hydroxy group-containing monomers include acrylic acid esters having a hydroxy group in a molecule thereof such as 2-hydroxyethyl acrylate and methacrylic acid esters having a hydroxy group in a molecule thereof such as 2-hydroxyethyl methacrylate.

Examples of reactive emulsifiers include emulsifiers based on polyalkylene oxide that have an anionic functional group and/or a non-ionic functional group. For example, sodium styrenesulfonate, sodium allyl alkyl sulfonate, alkyl allyl sulfosuccinate salt, polyoxyethylene alkyl allyl glycerin ether sulfate, polyoxyethylene alkylphenol allyl glycerin ether sulfate, or the like may be used.

One of the hydrophilic monomers described above may be used individually, or two or more of the hydrophilic monomers described above may be used in combination. Acidic group-containing monomers such as carboxyl group-containing monomers, sulfo group-containing monomers, and phosphate group-containing monomers are preferable as hydrophilic monomers, and, particularly from a viewpoint of even further increasing high-temperature peel strength, carboxyl group-containing monomers are more preferable, acrylic acid and methacrylic acid are even more preferable, and methacrylic acid is particularly preferable.

Moreover, with regards to hydrophilic monomer units that can be formed using the hydrophilic monomers described above, it is preferable that at least some of these monomer units are present in the form of an alkali metal salt of sodium, potassium, or the like or an ammonium salt in the polymer. In particular, it is preferable that at least some hydrophilic monomer units are present as an ammonium salt. When at least some hydrophilic monomer units are present as an ammonium salt, preservation stability of an obtained slurry composition can be even further increased.

Hydrophilic monomer units may be intermingled with the above-described aromatic vinyl monomer units and conjugated diene monomer units such as to form a random copolymer or may bonded as a graft chain to a core particle that is a block copolymer or random copolymer formed of aromatic vinyl monomer units and conjugated diene monomer units. In particular, the polymer that is an essential component of the presently disclosed binder composition is preferably a polymer having a graft chain with a hydrophilic monomer unit as a repeating unit bonded to a core particle that is a block copolymer formed of an aromatic vinyl block region and a conjugated diene block region. Note that the block copolymer constituting the core particle preferably only includes an aromatic vinyl block region and a conjugated diene block region.

The proportion constituted by hydrophilic monomer units in the polymer when the amount of all repeating units (monomer units and structural units) in the polymer is taken to be 100 mass% is required to be not less than 4.0 mass% and not more than 20 mass%. Moreover, the proportion constituted by hydrophilic monomer units in the polymer is preferably 5.0 mass% or more, and more preferably 5.5 mass% or more, and is preferably 16 mass% or less, and more preferably 10 mass% or less. When the proportion constituted by hydrophilic monomer units in the polymer is not less than any of the lower limits set forth above, stability when a slurry composition is produced can be improved while also improving high-temperature peel strength and normal peel strength of an obtained electrode. On the other hand, when the proportion constituted by hydrophilic monomer units in the block copolymer is not more than any of the upper limits set forth above, initial viscosity when a slurry composition is produced can be restricted from becoming excessively high, and, as a result, high-temperature peel strength and normal peel strength of an obtained electrode can be improved.

Note that from a viewpoint of improving pressability of an obtained electrode, it is preferable that the proportion constituted by hydrophilic monomer units in the polymer is not less than 3.7 mass% and not more than 20 mass% when the amount of all repeating units (monomer units and structural units) in the polymer is taken to be 100 mass%.

[Other monomer units]

Examples of monomers that can form other monomer units that may optionally be included in the polymer include, but are not specifically limited to, nitrile group-containing monomers such as acrylonitrile and methacrylonitrile; and amide group-containing monomers.

<<Production method of polymer>>

In a case in which the entire polymer or core particles of the polymer are a random polymer, the polymer can be polymerized by any known polymerization method such as solution polymerization, suspension polymerization, bulk polymerization, or emulsion polymerization, for example. Moreover, the polymerization reaction may be addition polymerization such as ionic polymerization, radical polymerization, or living radical polymerization. An emulsifier, dispersant, polymerization initiator, polymerization aid, or the like used in polymerization may be the same as typically used and the amount thereof may also be the same as typically used.

In a case in which core particles of the polymer are a block copolymer, the core particles can be produced, for example, through a step of block polymerizing an aromatic vinyl monomer and a conjugated diene monomer such as described above in an organic solvent to obtain a solution of a block copolymer including an aromatic vinyl block region and a conjugated diene block region (block copolymer solution production step) and a step of adding water to the obtained solution of the block copolymer and performing emulsification to form particles of the block copolymer (emulsification step).

-Block copolymer solution production step-

No specific limitations are placed on the method of block polymerization in the block copolymer solution production step. For example, a block copolymer can be produced by adding a second monomer component to a solution obtained through polymerization of a first monomer component differing from the second monomer component, polymerizing the second monomer component, and further repeating addition and polymerization of monomer components as necessary. The organic solvent that is used as a reaction solvent is not specifically limited and can be selected as appropriate depending on the types of monomers and so forth.

A block copolymer obtained through block polymerization in this manner is preferably subjected to a coupling reaction using a coupling agent in advance of the subsequently described emulsification step.

Examples of coupling agents that can be used in the coupling reaction include, but are not specifically limited to, difunctional coupling agents, trifunctional coupling agents, tetrafunctional coupling agents, and coupling agents having a functionality of 5 or higher.

Examples of difunctional coupling agents include difunctional halosilanes such as dichlorosilane, monomethyldichlorosilane, and dichlorodimethylsilane; difunctional haloalkanes such as dichloroethane, dibromoethane, methylene chloride, and dibromomethane; and difunctional tin halides such as tin dichloride, monomethyltin dichloride, dimethyltin dichloride, monoethyltin dichloride, diethyltin dichloride, monobutyltin dichloride, and dibutyltin dichloride.

Examples of trifunctional coupling agents include trifunctional haloalkanes such as trichloroethane and trichloropropane; trifunctional halosilanes such as methyltrichlorosilane and ethyltrichlorosilane; and trifunctional alkoxysilanes such as methyltrimethoxysilane, phenyltrimethoxysilane, and phenyltriethoxysilane.

Examples of tetrafunctional coupling agents include tetrafunctional haloalkanes such as carbon tetrachloride, carbon tetrabromide, and tetrachloroethane; tetrafunctional halosilanes such as tetrachlorosilane and tetrabromosilane; tetrafunctional alkoxysilanes such as tetramethoxysilane and tetraethoxysilane; and tetrafunctional tin halides such as tin tetrachloride and tin tetrabromide.

Examples of coupling agents having a functionality of 5 or higher include 1,1,1,2,2-pentachloroethane, perchloroethane, pentachlorobenzene, perchlorobenzene, octabromodiphenyl ether, and decabromodiphenyl ether.

One of these coupling agents may be used individually, or two or more of these coupling agents may be used in combination.

Of the examples given above, dichlorodimethylsilane is preferable as the coupling agent. The coupling reaction using the coupling agent results in a coupling moiety that is derived from the coupling agent being introduced into a constituent macromolecule chain (for example, a triblock structure) of the block copolymer.

Note that the block copolymer solution that is obtained after the block polymerization and optional coupling reaction described above may be subjected to the subsequently described emulsification step in that form or may be subjected to the emulsification step after addition of an additive such as an antioxidant, as necessary. Moreover, the block copolymer may be caused to precipitate to obtain a dried product, the obtained dried product may be dissolved in a good solvent such as cyclohexane to obtain a block copolymer solution, and then this block copolymer solution may be subjected to the emulsification step.

-Emulsification step-

Although no specific limitations are placed on the method of emulsification in the emulsification step, a method in which phase-inversion emulsification is performed with respect to a preliminary mixture of the block copolymer solution obtained in the block copolymer solution production step described above and an aqueous solution of an emulsifier is preferable, for example. Note that the phase-inversion emulsification can be carried out using a known emulsifier and emulsifying/dispersing device, for example. Specific examples of emulsifying/dispersing devices that can be used include, but are not specifically limited to, batch emulsifying/dispersing devices such as a Homogenizer (product name; produced by IKA), a Polytron (product name; produced by Kinematica AG), and a TK Auto Homo Mixer (product name; produced by Tokushu Kika Kogyo Co., Ltd.); continuous emulsifying/dispersing devices such as a TK Pipeline-Homo Mixer (product name; produced by Tokushu Kika Kogyo Co., Ltd.), a Colloid Mill (product name; produced by Shinko Pantec Co., Ltd.), a Thrasher (product name; produced by Nippon Coke & Engineering Co., Ltd.), a Trigonal Wet Fine Grinding Mill (product name; produced by Mitsui Miike Chemical Engineering Machinery Co., Ltd.), a Cavitron (product name; produced by EUROTEC Ltd.), a Milder (product name; produced by Pacific Machinery & Engineering Co., Ltd.), and a Fine Flow Mill (product name; produced by Pacific Machinery & Engineering Co., Ltd.); high-pressure emulsifying/dispersing devices such as a Microfluidizer (product name; produced by Mizuho Industrial Co., Ltd.), a Nanomizer (product name; produced by Nanomizer Inc.), an APV Gaulin or LAB 1000 (product name; produced by SPX FLOW, Inc.), a Star Burst (product name; produced by Sugino Machine Limited), and an ECONIZER (product name; produced by Sanmaru Machinery Co., Ltd.); membrane emulsifying/dispersing devices such as a Membrane Emulsifier (product name; produced by Reica Co., Ltd.); vibratory emulsifying/dispersing devices such as a Vibro Mixer (product name; produced by Reica Co., Ltd.);

and ultrasonic emulsifying/dispersing devices such as an Ultrasonic Homogenizer (product name; produced by Branson). Note that the conditions (for example, treatment temperature, treatment time, etc.) of the emulsification operation by the emulsifying/dispersing device may be selected as appropriate to obtain the desired dispersion state without any specific limitations.

A known method may be used to remove organic solvent from the emulsion obtained after emulsification as necessary, for example, so as to yield a water dispersion of core particles containing the block copolymer.

By subjecting the core particles (random polymer or block copolymer) obtained through these steps to graft chain bonding (grafting step), it is possible to produce a graft polymer having a graft chain with a hydrophilic monomer unit as a repeating unit bonded to a core particle.

-Grafting step-

Graft polymerization of a graft chain having a hydrophilic monomer unit as a repeating unit can be performed by a known graft polymerization method without any specific limitations. More specifically, the graft polymerization can be performed using a radical initiator such as a redox initiator that is a combination of an oxidant and a reductant, for example. Known oxidants and reductants can be used as the oxidant and the reductant without any specific limitations. Moreover, an alkali metal salt of sodium, potassium, or the like or an ammonium salt may be used as a neutralizer after the graft polymerization has been stopped. In particular, it is preferable to use an ammonium salt as a neutralizer from a viewpoint of increasing preservation stability of an obtained slurry composition. These neutralizers can be added to the graft polymerization reaction liquid in the form of an aqueous solution, for example.

In a case in which a redox initiator is used to perform graft polymerization with respect to core particles that are a block copolymer including an aromatic vinyl block region and a conjugated diene block region, cross-linking of conjugated diene units in the block copolymer may be caused to occur during introduction of a hydrophilic graft chain by graft polymerization. Note that it is not essential that cross-linking is caused to proceed concurrently to graft polymerization in production of a graft polymer, and the type of radical initiator and/or reaction conditions may be adjusted such that only graft polymerization is caused to proceed.

By performing a graft polymerization reaction of a hydrophilic monomer with respect to the core particles described above, it is possible to obtain the polymer as a graft polymer having a hydrophilic graft chain formed through repetition of a hydrophilic monomer unit bonded to a core particle.

<Solvent>

The presently disclosed binder composition is required to contain water as a solvent, but may contain a small amount of an organic solvent in addition to water.

<Other components>

The presently disclosed binder composition can contain components other than those described above (i.e., other components). For example, the binder composition may contain a known binder (styrene-butadiene random copolymer and/or acrylic polymer, etc.) other than the polymer described above.

Note that in a case in which the binder composition contains a binder other than the polymer described above, the content of the polymer described above is preferably 50 mass% or more, more preferably 55 mass% or more, and even more preferably 60 mass% or more of the total content of the polymer and the binder, and is preferably 90 mass% or less, more preferably 85 mass% or less, and even more preferably 80 mass% or less of the total content of the polymer and the binder.

The binder composition may also contain a water-soluble polymer. The water-soluble polymer is a component that can cause good dispersion of components such as the above-described polymer in water, and is preferably a synthetic polymer, and more preferably an addition polymer produced by addition polymerization, but is not specifically limited thereto. Note that the water-soluble polymer may be in the form of a salt (salt of water-soluble polymer). In other words, the term "water-soluble polymer" as used in the present disclosure is also inclusive of a salt of that water-soluble polymer. Also note that when a polymer is referred to as "water-soluble" in the present disclosure, this means that when 0.5 g of the polymer is dissolved in 100 g of water at a temperature of 25°C, insoluble content is less than 1.0 mass%.

The binder composition may also contain known additives. Examples of such known additives include antioxidants such as 2,6-di-tert-butyl-p-cresol, defoamers, and dispersants (excluding those corresponding to the above-described water-soluble polymer).

One of these other components may be used individually, or two or more of these other components may be used in combination in a freely selected ratio.

<Production method of binder composition>

The presently disclosed binder composition can be produced by mixing the polymer, other optionally used components, and so forth in the presence of water without any specific limitations. Note that in a situation in which a water dispersion of the polymer is used to produce the binder composition, liquid contained in this dispersion liquid may be used in that form as a medium of the binder composition.

(Slurry composition for non-aqueous secondary battery electrode)

The presently disclosed slurry composition is a composition that is for use in formation of an electrode mixed material layer of an electrode. The presently disclosed slurry composition contains the binder composition set forth above and further contains an electrode active material. In other words, the presently disclosed slurry composition contains the previously described polymer, an electrode active material, and water, and can further contain other optional components. As a result of the presently disclosed slurry composition containing the binder composition set forth above, an electrode that includes an electrode mixed material layer formed from this slurry composition has excellent peel strength after exposure to high temperature. Moreover, a secondary battery that includes this electrode has low internal resistance.

<Binder composition>

The binder composition is the presently disclosed binder composition set forth above that contains a specific polymer and water.
No specific limitations are placed on the amount of the binder composition in the slurry composition. For example, the amount of the binder composition can be set as an amount such that, in terms of solid content, the amount of the polymer is not less than 0.5 parts by mass and not more than 15 parts by mass per 100 parts by mass of the electrode active material.

<Electrode active material>

Any known electrode active material that is used in secondary batteries can be used as the electrode active material without any specific limitations. Specifically, examples of electrode active materials that can be used in an electrode mixed material layer of a lithium ion secondary battery, which is one example of a secondary battery, include the following electrode active materials, but are not specifically limited thereto.

[Positive electrode active material]

A positive electrode active material that is compounded in a positive electrode mixed material layer of a positive electrode in a lithium ion secondary battery may, for example, be a compound that includes a transition metal such as a transition metal oxide, a transition metal sulfide, or a complex metal oxide of lithium and a transition metal. Examples of the transition metal include Ti, V, Cr, Mn, Fe, Co, Ni, Cu, and Mo.
Specific examples of positive electrode active materials that may be used include, but are not specifically limited to, lithium-containing cobalt oxide ($LiCoO_2$), lithium manganate ($LiMn_2O_4$), lithium-containing nickel oxide ($LiNiO_2$), a lithium-containing complex oxide of Co-Ni-Mn such as $LiNi_{5/10}Co_{2/10}Mn_{3/10}O_2$ (NMC532), a lithium-containing complex oxide of Ni-Mn-Al, a lithium-containing complex oxide of Ni-Co-Al, olivine-type lithium iron phosphate ($LiFePO_4$), olivine-type lithium manganese phosphate ($LiMnPO_4$), a lithium-rich spinel compound represented by $Li_{1+x}Mn_{2-x}O_4$ ($0 < x < 2$), $Li[Ni_{0.17}Li_{0.2}Co_{0.07}Mn_{0.56}]O_2$, and $LiNi_{0.5}Mn_{1.5}O_4$.
Note that one of the positive electrode active materials described above may be used individually, or two or more of the positive electrode active materials described above may be used in combination.

[Negative electrode active material]

A negative electrode active material that is compounded in a negative electrode mixed material layer of a negative electrode in a lithium ion secondary battery may, for example, be a carbon-based negative electrode active material, a metal-based negative electrode active material, or a negative electrode active material that is a combination thereof.
A carbon-based negative electrode active material can be defined as an active material that contains carbon as its main framework and into which lithium can be inserted (also referred to as "doping"). Specific examples of carbon-based negative electrode active materials include carbonaceous materials such as coke, mesocarbon microbeads (MCMB), mesophase pitch-based carbon fiber, pyrolytic vapor-grown carbon fiber, pyrolyzed phenolic resin, polyacrylonitrile-based carbon fiber, quasi-isotropic carbon, pyrolyzed furfuryl alcohol resin (PFA), and hard carbon; and graphitic materials such as natural graphite and artificial graphite.

A metal-based negative electrode active material is an active material that contains metal, the structure of which usually contains an element that allows insertion of lithium, and that has a theoretical electric capacity per unit mass of 500 mAh/g or more when lithium is inserted. Examples of metal-based active materials include lithium metal; a simple substance of metal that can form a lithium alloy (for example, Ag, Al, Ba, Bi, Cu, Ga, Ge, In, Ni, P, Pb, Sb, Si, Sn, Sr, Zn, or Ti); and an oxide, sulfide, nitride, silicide, carbide, or phosphide of any of the preceding examples. Moreover, an oxide such as lithium titanate can be used.

Note that one of the negative electrode active materials described above may be used individually, or two or more of the negative electrode active materials described above may be used in combination.

<Other components>

Examples of other components that can be contained in the slurry composition include, but are not specifically limited to, conductive materials and the same components as other components that can be contained in the presently disclosed binder composition. Note that one other component may be used individually, or two or more other components may be used in combination in a freely selected ratio.

<Production of slurry composition>

No specific limitations are placed on the method by which the slurry composition is produced.

For example, the slurry composition can be produced by mixing the binder composition, the electrode active material, and other components that are used as necessary in the presence of water.

Note that a medium used in production of the slurry composition may include a medium that was contained in the binder composition. The mixing method is not specifically limited and can be mixing using a typically used stirrer or disperser.

(Electrode for non-aqueous secondary battery)

The presently disclosed electrode for a non-aqueous secondary battery includes an electrode mixed material layer formed using the slurry composition for a non-aqueous secondary battery electrode set forth above. Consequently, the electrode mixed material layer is formed of a dried product of the slurry composition set forth above, normally contains the electrode active material and a component derived from the polymer, and optionally contains other components. It should be noted that components contained in the electrode mixed material layer are components that were contained in the slurry composition for a non-aqueous secondary battery electrode. Furthermore, the preferred ratio of these components in the electrode mixed material layer is the same as the preferred ratio of these components in the slurry composition. Although the polymer is present in a particulate form in the binder composition and the slurry composition, the polymer may have a particulate form or any other form in the electrode mixed material layer formed using the slurry composition.

The presently disclosed electrode for a non-aqueous secondary battery has excellent peel strength after exposure to high temperature as a result of the electrode mixed material layer being formed using the slurry composition for a non-aqueous secondary battery electrode set forth above. Moreover, a secondary battery that includes the electrode has low internal resistance.

<Production of electrode for non-aqueous secondary battery>

The electrode mixed material layer of the presently disclosed electrode for a non-aqueous secondary battery can be formed by any of the following methods, for example.

(1) A method in which the presently disclosed slurry composition is applied onto the surface of a current collector and is then dried
(2) A method in which a current collector is immersed in the presently disclosed slurry composition and is then dried
(3) A method in which the presently disclosed slurry composition is applied onto a releasable substrate and is dried to produce an electrode mixed material layer that is then transferred onto the surface of a current collector

Of these methods, method (1) is particularly preferable since it allows simple control of the thickness of the electrode mixed material layer. In more detail, method (1) includes a step of applying the slurry composition onto a current collector (application step) and a step of drying the slurry composition that has been applied onto the current collector to form an electrode mixed material layer on the current collector (drying step).

[Application step]

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition may be applied onto one side or both sides of the current collector. The thickness of the slurry coating on the current collector after application but before drying may be set as appropriate in accordance with the thickness of the electrode mixed material layer to be obtained after drying.

The current collector onto which the slurry composition is applied is a material having electrical conductivity and electrochemical durability. Specifically, the current collector may, for example, be made of iron, copper, aluminum, nickel, stainless steel, titanium, tantalum, gold, platinum, or the like. One of these materials may be used individually, or two or more of these materials may be used in combination in a freely selected ratio.

[Drying step]

The slurry composition on the current collector can be dried by any commonly known method without any specific limitations. Examples of drying methods that can be used include drying by warm, hot, or low-humidity air; drying in a vacuum; and drying by irradiation with infrared light, electron beams, or the like. Through drying of the slurry composition on the current collector as described above, an electrode mixed material layer is formed on the current collector, thereby providing an electrode for a non-aqueous secondary battery that includes the current collector and the electrode mixed material layer.

After the drying step, the electrode mixed material layer may be further subjected to a pressing process, such as mold pressing or roll pressing. The pressing process improves close adherence of the electrode mixed material layer and the current collector and enables further densification of the obtained electrode mixed material layer. Furthermore, in a case in which the electrode mixed material layer contains a curable polymer, the polymer is preferably cured after the electrode mixed material layer has been formed.

(Non-aqueous secondary battery)

The presently disclosed non-aqueous secondary battery includes a positive electrode, a negative electrode, an electrolyte solution, and a separator, and has the electrode for a non-aqueous secondary battery set forth above as at least one of the positive electrode and the negative electrode. The presently disclosed non-aqueous secondary battery can display excellent cycle characteristics as a result of being produced by using the electrode for a non-aqueous secondary battery set forth above as at least one of the positive electrode and the negative electrode.

Although the following describes, as one example, a case in which the secondary battery is a lithium ion secondary battery, the presently disclosed secondary battery is not limited to the following example.

<Electrodes>

Examples of electrodes other than the presently disclosed electrode for a non-aqueous secondary battery set forth above that can be used in the presently disclosed non-aqueous secondary battery include known electrodes that are used in production of secondary batteries without any specific limitations. Specifically, an electrode obtained by forming an electrode mixed material layer on a current collector by a known production method may be used as an electrode other than the presently disclosed electrode for a non-aqueous secondary battery set forth above.

<Electrolyte solution>

The electrolyte solution is normally an organic electrolyte solution obtained by dissolving a supporting electrolyte in an organic solvent. The supporting electrolyte of the lithium ion secondary battery may, for example, be a lithium salt. Examples of lithium salts that can be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable as they readily dissolve in solvents and exhibit a high degree of dissociation. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

No specific limitations are placed on the organic solvent used in the electrolyte solution so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), ethyl methyl carbonate (EMC), and vinylene carbonate (VC); esters such as $\gamma$-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution may be adjusted as appropriate. Furthermore, known additives may be added to the electrolyte solution.

<Separator>

Examples of separators that can be used include, but are not specifically limited to, those described in JP2012-204303A. Of these separators, a microporous membrane made of polyolefinic (polyethylene, polypropylene, polybutene, or polyvinyl chloride) resin is preferred because such a membrane can reduce the total thickness of the separator, which increases the ratio of electrode active material in the secondary battery, and consequently increases the volumetric capacity.

The presently disclosed secondary battery can be produced by, for example, stacking the positive electrode and the negative electrode with the separator in-between, performing rolling, folding, or the like of the resultant laminate, as necessary, in accordance with the battery shape, placing the laminate in a battery container, injecting the electrolyte solution into the battery container, and sealing the battery container. The electrode for a non-aqueous secondary battery set forth above is used as at least one of the positive electrode and the negative electrode in the presently disclosed non-aqueous secondary battery, and is preferably used as the negative electrode. Note that the presently disclosed non-aqueous secondary battery may be provided with an overcurrent preventing device such as a fuse or a PTC device; an expanded metal; or a lead plate, as necessary, in order to prevent pressure increase inside the secondary battery and occurrence of overcharging or overdischarging. The shape of the secondary battery may be a coin type, button type, sheet type, cylinder type, prismatic type, flat type, or the like.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through polymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

In the examples and comparative examples, various attributes and evaluations were measured or performed as described below.

<Proportional contents of monomer units in polymer>

The proportional contents of monomer units in a polymer produced in each example or comparative example were measured by $^1$H-NMR (produced by JEOL Ltd.). Specifically, the peak area attributed to each monomer was determined, this peak area was divided by the number of protons included in the peak to calculate the molar ratio of monomer units, and then this was converted to a weight ratio using the molecular weight of each monomer.

<Median diameter of polymer>

The median diameter of a polymer was measured using a laser diffraction particle diameter distribution analyzer (produced by Shimadzu Corporation; product name: SALD-2300). Specifically, a water dispersion of the polymer was prepared, a particle size distribution (by volume) was measured using the above-described device, and the particle diameter at which cumulative volume calculated from a small diameter end of the distribution reached 50% was determined as the median diameter ($\mu$m).

<Gel content of polymer>

A binder composition produced in each example or comparative example was dried at 50% humidity and room temperature (23°C to 25°C) to form a film of approximately 0.3 mm in thickness. The formed film was cut to 3 mm-square and was precisely weighed. The mass of the film piece obtained by this cutting was taken to be w0. The film piece was immersed in 100 g of tetrahydrofuran (THF) at 25°C for 24 hours. Thereafter, the film piece was pulled out of the THF, was vacuum dried at 105°C for 3 hours, and then the mass w1 of insoluble content was measured. The gel content (mass%) of the polymer was calculated according to the following formula.

$$\text{Gel content (mass\%)} = (w1/w0) \times 100$$

<Loss tangent tan $\delta$ and loss modulus G" of polymer>

<<Production of polymer film>>

A binder composition produced in each example or comparative example was measured out onto a Teflon® (Teflon is a registered trademark in Japan, other countries, or both) petri dish such as to have a thickness after drying of 50 $\mu$m. Thereafter, 12 hours of vacuum drying was performed at room temperature to obtain a polymer film.

<<Measurement of viscoelasticity of polymer film>>

The polymer film produced as described above was used in measurement by a viscoelasticity measurement device (Production RPA produced by Alpha Technologies) while increasing the temperature in stages from 30°C to 200°C under conditions of a frequency of 52 Hz and a strain of 10%. In this measurement, the loss modulus G" and the loss tangent tan $\delta$ were calculated based on results at 30°C.

<Stationary stability of binder composition>

A test tube of 10 cm in length was prepared. A binder composition produced in each example or comparative example was poured into the test tube up to a height of 5 mm from the top thereof, and then a lid was placed on the test tube to obtain a test sample. This test sample was stored at rest in an environment having a temperature of 25°C for 1 month. The test tube was subsequently unsealed, and 1 g of binder composition was sampled from each of an upper layer portion and a lower layer portion of the liquid. In this sampling, a Pasteur pipette was used to perform sampling at a depth of 1 cm from the liquid surface for the upper layer sample and at a height of 1 cm from the bottom surface for the lower layer sample. Each of these samples was subsequently dried on an aluminum plate, and the solid content concentration of each sample was calculated from the weight change between before and after drying. The drying conditions were set as 30 minutes at 130°C, and the solid content concentration was determined based on the following formula.

$$\text{Solid content concentration} = (\text{Weight after drying})/(\text{Weight before drying}) \times 100$$

A: Solid content concentration difference between upper layer and lower layer portions of less than 1%
B: Solid content concentration difference between upper layer and lower layer portions of not less than 1% and less than 2%
C: Solid content concentration difference between upper layer and lower layer portions of not less than 2% and less than 3%
D: Solid content concentration difference between upper layer and lower layer portions of 3% or more

<Initial viscosity of slurry composition>

A planetary mixer was charged with 97.5 parts of natural graphite (theoretical capacity: 360 mAh/g) as a negative electrode active material and 1 part in terms of solid content of carboxymethyl cellulose as a thickener. These materials were diluted to a solid content concentration of 60% with deionized water and were then kneaded at a rotation speed of 45 rpm for 60 minutes. Thereafter, 1.5 parts in terms of solid content of a binder composition for a negative electrode obtained in each example was loaded into the planetary mixer, and a further 40 minutes of kneading was performed at a rotation speed of 40 rpm. The solid content was further adjusted to 48% with deionized water, and then the viscosity was measured using a B-type viscometer (produced by Toki Sangyo Co., Ltd.; product name: TVB-10; rotation speed: 60 rpm).

A: Less than 3,000 rpm
B: Not less than 3,000 rpm and less than 3,500 rpm
C: Not less than 3,500 rpm and less than 4,000 rpm
D: 4,000 rpm or more

<Preservation stability of slurry composition>

The viscosity $\eta0$ of an obtained slurry composition was measured using a B-type viscometer (produced by Toki Sangyo Co., Ltd.; product name: TVB-10; rotation speed: 60 rpm). Next, the slurry composition that had undergone viscosity measurement was stirred for 24 hours using a planetary mixer (rotation speed: 60 rpm), and the viscosity $\eta1$ of the slurry composition after stirring was measured using the same type of B-type viscometer as described above (rotation speed: 60 rpm). The viscosity maintenance rate $\Delta\eta$ of the slurry composition between before and after stirring was calculated ($\Delta\eta = (\eta0-\eta1)/\eta0 \times 100(\%)$), and then viscosity stability of the slurry composition was evaluated by the following standard. Note that the temperature during viscosity measurement was 25°C. An absolute value | $\Delta\eta$ | for the viscosity maintenance rate that is closer to 0 indicates that the slurry composition has better viscosity stability.

A: Absolute value | $\Delta\eta$ | for viscosity maintenance rate of not less than 0% and less than 10%
B: Absolute value | $\Delta\eta$ | for viscosity maintenance rate of not less than 10% and less than 20%
C: Absolute value | $\Delta\eta$ | for viscosity maintenance rate of not less than 20% and less than 30%
D: Absolute value | $\Delta\eta$ | for viscosity maintenance rate of 30% or more

<Normal peel strength of electrode>

A negative electrode produced in each example or comparative example was, in that state, cut out as a rectangle of 100 mm in length and 10 mm in width to obtain a test specimen. The test specimen was placed with the surface of the negative electrode mixed material layer facing downward, and cellophane tape was affixed to the surface of the negative electrode mixed material layer. Cellophane tape prescribed by JIS Z1522 was used as the cellophane tape. Moreover, the cellophane tape was fixed to a test stage. Thereafter, one end of the current collector was pulled vertically upward at a pulling speed of 50 mm/min to peel off the current collector, and the stress during this peeling was measured. Three measurements were made in this manner. An average value of these measurements was determined and was taken to be the peel strength. A larger peel strength indicates greater binding strength of the negative electrode mixed material layer to the current collector (i.e., greater close adherence strength).

A: Peel strength of 16 N/m or more.
B: Peel strength of not less than 14 N/m and less than 16 N/m
C: Peel strength of not less than 12 N/m and less than 14 N/m
D: Peel strength of less than 12 N/m

<High-temperature peel strength of electrode>

A negative electrode produced in each example or comparative example was vacuum dried at 100°C for 10 hours and was then cut out as a rectangle of 100 mm in length and 10 mm in width to obtain a test specimen. The test specimen was placed with the surface of the negative electrode mixed material layer facing downward, and cellophane tape was affixed to the surface of the negative electrode mixed material layer. Cellophane tape prescribed by JIS Z1522 was used as the cellophane tape. Moreover, the cellophane tape was fixed to a test stage. Thereafter, one end of the current collector was pulled vertically upward at a pulling speed of 50 mm/min to peel off the current collector, and the stress during this peeling was measured. Three measurements were made in this manner. An average value of these measurements was determined and was taken to be the peel strength. A larger peel strength as measured in this manner indicates greater binding strength of the negative electrode mixed material layer to the current collector after exposure to high temperature (i.e., greater close adherence strength after exposure to high temperature).

A: Peel strength of 22 N/m or more
B: Peel strength of not less than 18 N/m and less than 22 N/m
C: Peel strength of not less than 14 N/m and less than 18 N/m

D: Peel strength of less than 14 N/m

<Internal resistance of secondary battery>

IV resistance was measured as described below using a lithium ion secondary battery prepared in each example or comparative example as a measurement subject. The lithium ion secondary battery was subjected to conditioning by performing three cycles of an operation of charging to a voltage of 4.2 V with a charge rate of 0.1C, resting for 10 minutes, and subsequently CV discharging to 3.0 V with a discharge rate of 0.1C at a temperature of 25°C. Thereafter, the lithium ion secondary battery was charged to 3.75 V at 1C (C is a value expressed by rated capacity (mA)/1 hour (hr)) and was subjected to 15 seconds of charging and 15 seconds of discharging centered around 3.75 V at each of 0.5C, 1.0C, 1.5C, and 2.0C in a -10°C atmosphere. The battery voltage after 15 seconds at the charging side in each case was plotted against the current value, and the gradient of this plot was determined as the charging IV resistance ($\Omega$). The obtained IV resistance value ($\Omega$) was evaluated by the following standard. A smaller IV resistance value indicates that the secondary battery has less internal resistance and better low-temperature characteristics.

A: IV resistance of 15 $\Omega$ or less
B: IV resistance of more than 15 $\Omega$ and not more than 17 $\Omega$
C: IV resistance of more than 17 $\Omega$

<Close adherence of electrode mixed material layer after pressing>

An edge of a negative electrode produced in each example or comparative example was visually inspected in order to confirm whether there was a site where the negative electrode mixed material layer and the current collector were peeled by 1 mm or more in an inward direction from the edge. In a case in which such a peeling site was not confirmed, the post-pressing electrode mixed material layer was considered to have a low tendency to peel from a substrate, and an evaluation of "good" was given.

<Rate of density change of electrode after pressing>

The density of an electrode mixed material layer in a negative electrode produced in each example or comparative example was remeasured after 24 hours of storage in the same environment having a temperature of 25 ± 3°C. In a case in which the reduction of density was 0.10 g/cm$^3$ or less, the electrode was considered to have a low tendency for spring-back to occur, and an evaluation of "good" was given.

(Example 1)

<Production of binder composition for non-aqueous secondary battery negative electrode>

<<Production of polymer>>

[Production of cyclohexane solution of block copolymer]

A pressure-resistant reactor was charged with 233.3 kg of cyclohexane, 54.2 mmol of N,N,N',N'-tetramethylethylenediamine (hereinafter, referred to as "TMEDA"), and 30.0 kg of styrene as an aromatic vinyl monomer. These materials were stirred at 40°C while adding 1806.5 mmol of n-butyllithium as a polymerization initiator, and then 1 hour of polymerization was performed while raising the temperature to 50°C. The polymerization conversion rate of styrene was 100%. Next, 70.0 kg of butadiene as an aliphatic conjugated diene monomer was continuously added into the pressure-resistant reactor over 1 hour while performing temperature control to maintain a temperature of 50°C to 60°C. The polymerization reaction was continued for 1 hour more after addition of the butadiene was complete. The polymerization conversion rate of butadiene was 100%. Next, 722.6 mmol of dichlorodimethylsilane as a coupling agent was added into the pressure-resistant reactor and a coupling reaction was carried out for 2 hours to form a styrene-butadiene coupled block copolymer. Thereafter, 3612.9 mmol of methanol was added to the reaction liquid and was thoroughly mixed therewith to deactivate active ends. Next, 0.3 parts of 2,6-di-tert-butyl-p-cresol as an antioxidant was added to 100 parts of the reaction liquid (containing 30.0 parts of polymer component) and was mixed therewith. The resultant mixed solution was gradually added dropwise into hot water of 85°C to 95°C to cause volatilization of solvent and obtain a precipitate. The precipitate was pulverized and then hot-air dried at 85°C to collect a dried product containing a block copolymer.

The collected dried product was dissolved in cyclohexane to produce a block copolymer solution having a block copolymer concentration of 15%.

[Phase-inversion emulsification]

Sodium alkylbenzene sulfonate was dissolved in deionized water to produce a 5% aqueous solution. After loading 5,000 g of the obtained block copolymer solution and 5,000 g of the obtained aqueous solution into a tank, preliminary mixing thereof was performed by stirring. Next, the preliminary mixture was transferred from the tank to a continuous high performance emulsifying/dispersing device (produced by Pacific Machinery & Engineering Co., Ltd.; product name: CAVITRON) at a rate of 100 g/min using a metering pump and was stirred at a rotation speed of 20,000 rpm so as to obtain an emulsion in which the preliminary mixture had undergone phase-inversion emulsification.

Next, cyclohexane in the obtained emulsion was evaporated under reduced pressure in a rotary evaporator. The emulsion that had been subjected to evaporation was subsequently subjected to 10 minutes of centrifugation at 7,000 rpm in a centrifuge (produced by Hitachi Koki Co., Ltd.; product name: Himac CR21N), and then the upper layer portion was withdrawn to perform concentrating.

Finally, the upper layer portion was filtered through a 100-mesh screen to obtain a water dispersion containing a particulate block copolymer (block copolymer latex).

[Graft polymerization and cross-linking]

Distilled water was added to dilute the obtained block copolymer latex such that the amount of water was 850 parts relative to 100 parts (in terms of solid content) of the particulate block copolymer. The diluted block copolymer latex was loaded into a stirrer-equipped polymerization reactor that had undergone nitrogen purging and was heated to a temperature of 30°C under stirring. In addition, a separate vessel was used to produce a diluted methacrylic acid solution by mixing 6 parts of methacrylic acid as a hydrophilic monomer and 15 parts of distilled water. The diluted methacrylic acid solution was added over 30 minutes into the polymerization reactor that had been heated to 30°C.

A separate vessel was used to produce a solution (g) containing 7 parts of distilled water and 0.6 parts of ascorbic acid as a reductant. The obtained solution was added into the polymerization reactor, 0.5 parts of cumene hydroperoxide (produced by NOF Corporation; product name: CHP) was subsequently added as an oxidant, and a reaction was carried out at 30°C for 1 hour and then at 70°C for 2 hours to yield a water dispersion of a particulate polymer. The polymerization conversion rate was 99%.

The obtained water dispersion was adjusted to pH 8 through addition of 8% ammonia water.

<Production of slurry composition for secondary battery positive electrode>

In a planetary mixer, 97 parts of an active material NMC532 ($LiNi_{5/10}Co_{2/10}Mn_{3/10}O_2$) based on a lithium complex oxide of Co-Ni-Mn as a positive electrode active material, 1 part of acetylene black (produced by Denka Company Limited; product name: HS-100) as a conductive material, 1 part in terms of solid content of the polymer obtained as described above, and 1 part of PVdF (KF7208 produced by Kureha Corporation) were added together and mixed. In addition, N-methyl-2-pyrrolidone (NMP) was gradually added as an organic solvent and was mixed therewith by stirring at a temperature of 25 ± 3°C and a rotation speed of 25 rpm to adjust the viscosity (B-type viscometer; 60 rpm (M4 rotor); 25 ± 3°C) to 3,600 mPa·s.

<Production of positive electrode>

The slurry composition for a positive electrode obtained as described above was applied onto aluminum foil of 20 μm in thickness serving as a current collector by a comma coater such as to have a coating weight of 20 ± 0.5 mg/cm². 

The aluminum foil was then conveyed inside an oven having a temperature of 120°C for 2 minutes and an oven having a temperature of 130°C for 2 minutes at a speed of 200 mm/min so as to dry the slurry composition on the aluminum foil and thereby obtain a positive electrode web including a positive electrode mixed material layer formed on the current collector.

The positive electrode mixed material layer-side of the produced positive electrode web was subsequently roll pressed in an environment having a temperature of 25 ± 3°C to obtain a positive electrode having a positive electrode mixed material layer density of 3.20 g/cm³.

<Production of slurry composition for negative electrode>

A planetary mixer was charged with 97.5 parts of natural graphite (theoretical capacity: 360 mAh/g) as a negative electrode active material and 1 part in terms of solid content of carboxymethyl cellulose as a thickener. These materials were diluted to a solid content concentration of 60% with deionized water and were subsequently kneaded at a rotation speed of 45 rpm for 60 minutes. Thereafter, 1.5 parts in terms of solid content of the binder composition for a negative electrode obtained as described above was loaded into the planetary mixer, and a further 40 minutes of kneading was performed at a rotation speed of 40 rpm. In addition, deionized water was added to adjust the viscosity to 3,000 ± 500 mPa·s (measured by B-type viscometer at 25°C and 60 rpm) and thereby produce a slurry composition for a negative electrode.

<Production of negative electrode>

The slurry composition for a negative electrode was applied onto the surface of electrolytic copper foil of 15 μm in thickness serving as a current collector by a comma coater such as to have a coating weight of 11 ± 0.5 mg/cm$^2$. The copper foil with the slurry composition for a negative electrode applied thereon was then conveyed inside an oven having a temperature of 120°C for 2 minutes and an oven having a temperature of 130°C for 2 minutes at a speed of 400 mm/min so as to dry the slurry composition on the copper foil and thereby obtain a negative electrode web including a negative electrode mixed material layer formed on the current collector.
The negative electrode mixed material layer-side of the produced negative electrode web was subsequently roll pressed in an environment having a temperature of 25 ± 3°C to obtain a negative electrode having a negative electrode mixed material layer density of 1.60 g/cm$^3$.

<Preparation of separator for secondary battery>

A separator made of a single layer of polypropylene (#2500 produced by Celgard, LLC.) was used.

<Production of non-aqueous secondary battery>

The negative electrode, positive electrode, and separator described above were used to produce a single-layer laminate cell (initial design discharge capacity equivalent to 30 mAh), were then arranged inside aluminum packing, and were subjected to vacuum drying under conditions of 10 hours at 60°C. Thereafter, LiPF$_6$ solution of 1.0 M in concentration (solvent: mixed solvent of ethylene carbonate (EC)/diethyl carbonate (DEC) = 5/5 (volume ratio); additive: containing 2 volume% (solvent ratio) of vinylene carbonate) was loaded into the aluminum packing as an electrolyte solution. The aluminum packing was then closed by heat sealing at a temperature of 150°C to tightly seal an opening of the aluminum packing, and thereby produce a lithium ion secondary battery. This lithium ion secondary battery was used to evaluate internal resistance as previously described. The result is shown in Table 1.

(Example 2)

Various operations, measurements, and evaluations were performed in the same way as in Example 1 with the exception that in production of the polymer, the amounts of styrene, 1,3-butadiene, and methacrylic acid were changed such that the obtained polymer had a chemical composition indicated in Table 1 and the concentration of the block copolymer added in phase-inversion emulsification was changed so as to obtain a polymer having a particle diameter indicated in Table 1. The results are shown in Table 1.

(Examples 3 and 4)

Various operations, measurements, and evaluations were performed in the same way as in Example 1 with the exception that in production of the polymer, the amounts of styrene and 1,3-butadiene were changed such that the obtained polymer had a chemical composition indicated in Table 1 and the concentration of the block copolymer added in phase-inversion emulsification was changed so as to obtain a polymer having a particle diameter and film properties indicated in Table 1. The results are shown in Table 1.

(Example 5)

Various operations, measurements, and evaluations were performed in the same way as in Example 2 with the exception that the concentration of the block copolymer added in phase-inversion emulsification in the process of producing the polymer was changed so as to obtain a polymer having a particle diameter and film properties indicated in Table 1. The results are shown in Table 1.

(Examples 6 to 8)

Various operations, measurements, and evaluations were performed in the same way as in Example 1 with the exception that in production of the polymer, isoprene was used instead of 1,3-butadiene as a conjugated diene monomer, the amounts of styrene and isoprene there were compounded were changed such that the obtained polymer had a chemical composition indicated in Table 1, and the concentration of the block copolymer added in phase-inversion emulsification was changed so as to obtain a polymer having a particle diameter and film properties indicated in Table 1. The results are shown in Table 1.

(Example 9)

Various operations, measurements, and evaluations were performed in the same way as in Example 1 with the exception that in production of the polymer, the amounts of styrene, 1,3-butadiene, and methacrylic acid were changed such that the obtained polymer had a chemical composition indicated in Table 1 and the concentration of the block copolymer added in phase-inversion emulsification was changed so as to obtain a polymer having a particle diameter and film properties indicated in Table 1. The results are shown in Table 1.

(Example 10)

Various operations, measurements, and evaluations were performed in the same way as in Example 2 with the exception that the concentration of the block copolymer added in phase-inversion emulsification in the process of producing the polymer was changed so as to obtain a polymer having a particle diameter and film properties indicated in Table 1. The results are shown in Table 1.

(Example 11)

Various operations, measurements, and evaluations were performed in the same way as in Example 2 with the exception that acrylic acid was compounded instead of methacrylic acid as a hydrophilic monomer in production of the polymer. The results are shown in Table 1.

(Example 12)

Various operations, measurements, and evaluations were performed in the same way as in Example 1 with the exception that the slurry composition for a negative electrode was produced using a random copolymer produced as described below as a polymer in addition to the block copolymer produced in Example 1. Note that the mixing ratio of the block copolymer and the random copolymer in production of the slurry composition for a negative electrode was 50:50 by mass. Also note that the chemical composition, median diameter, and film properties of a copolymer indicated in Table 1 are for a mixture of the block copolymer and the random copolymer.

<Production of random copolymer>

With respect to a mixture of 62 parts of 1,3-butadiene as an aliphatic conjugated diene monomer, 34 parts of styrene as an aromatic vinyl monomer, 4 parts of methacrylic acid as a hydrophilic monomer, 0.3 parts of tert-dodecyl mercaptan as a chain transfer agent, 0.3 parts of sodium lauryl sulfate as an emulsifier, and 150 parts of deionized water that was loaded into a vessel A, addition thereof into a pressure-resistant vessel B from the vessel A was initiated, and, simultaneously thereto, addition of 1 part of potassium persulfate as a polymerization initiator into the pressure-resistant vessel B was also initiated so as to initiate polymerization. The reaction temperature was maintained at 75°C.
Once 5 hours 30 minutes had passed from the start of polymerization, the temperature was raised to 85°C, and the reaction was continued for 6 hours.
The reaction was quenched by cooling at the point at which the polymerization conversion rate reached 97% to yield a mixture containing a particulate random polymer. The mixture containing the particulate random polymer was adjusted to pH 8 through addition of 5% sodium hydroxide aqueous solution. Unreacted monomer was subsequently removed through thermal-vacuum distillation. Cooling was then performed to yield a water dispersion (solid content concentration: 40%) containing the random polymer.

(Example 13)

Various operations, measurements, and evaluations were performed in the same way as in Example 1 with the exception that sodium hydroxide aqueous solution was used for neutralization in the grafting step during production of the polymer. The results are shown in Table 1.

(Example 14)

Various operations, measurements, and evaluations were performed in the same way as in Example 1 with the exception that the slurry composition for a negative electrode was produced using only the random polymer produced in Example 12 as a polymer. The results are shown in Table 1.

(Comparative Example 1)

Various operations, measurements, and evaluations were performed in the same way as in Example 1 with the exception that in production of the polymer, the amounts of styrene, 1,3-butadiene, and methacrylic acid were changed such that the obtained polymer satisfied a chemical composition, median diameter, and film properties indicated in Table 1 and the concentration of the block copolymer added in phase-inversion emulsification was changed so as to obtain a polymer having a particle diameter indicated in Table 1. The results are shown in Table 1.

(Comparative Example 2)

Various operations, measurements, and evaluations were performed in the same way as in Example 1 with the exception that in production of the polymer, itaconic acid was used instead of methacrylic acid as a hydrophilic monomer and the amounts of monomers were changed such that the obtained polymer satisfied a chemical composition, median diameter, and film properties indicated in Table 1, and sodium hydroxide aqueous solution was used for neutralization in the grafting step during production of the polymer. The results are shown in Table 1.

(Comparative Example 3)

Various operations, measurements, and evaluations were performed in the same way as in Example 1 with the exception that in production of the polymer, acrylic acid was used instead of methacrylic acid as a hydrophilic monomer and the amounts of monomers were changed such that the obtained polymer satisfied a chemical composition, median diameter, and film properties indicated in Table 1, and sodium hydroxide aqueous solution was used for neutralization in the grafting step during production of the polymer. The results are shown in Table 1.

(Comparative Examples 4 and 5)

Various operations, measurements, and evaluations were performed in the same way as in Example 1 with the exception that the mixing ratio of monomers compounded during production of the polymer was changed such that the obtained polymer satisfied a chemical composition indicated in Table 1. The results are shown in Table 1.

(Comparative Example 6)

Various operations, measurements, and evaluations were performed in the same way as in Example 2 with the exception that the concentration of the block copolymer added in phase-inversion emulsification in the process of producing the polymer was changed so as to obtain a polymer having a particle diameter and film properties indicated in Table 1. The results are shown in Table 1.

In Table 1:

"St" indicates styrene monomer unit;
"BD" indicates 1,3-butadiene monomer unit;
"MAA" indicates methacrylic acid monomer unit;
"AA" indicates acrylic acid monomer unit;
"IA" indicates itaconic acid monomer unit; and
"THF" indicates tetrahydrofuran.

[Table 1]

Table 1

| | | | | Example 1 | Example 2 | Example 3 | Example 4 | Example 5 | Example 6 | Example 7 | Example 8 | Example 9 | Example 10 | Example 11 | Example 12 | Example 13 | Example 14 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|---|---|---|---|---|---|---|---|---|---|
| Binder composition | Polymer | Type | | Block | Block | Block | Block | Block | Block | Block | Block | Block | Block | Block | Block + Random | Block | Random | Block | Random | Random | Block | Block | Block |
| | | Aromatic vinyl monomer unit | Type | St | St | St | St | St | St | St | St | St | St | St | St | St | St | St | St | St | St | St | St |
| | | | Amount [mass%] | 28.2 | 37.6 | 29.1 | 23.5 | 37.6 | 17.9 | 28.2 | 22.6 | 25.0 | 37.6 | 37.6 | 45.0 | 28.2 | 34.0 | 42.3 | 62.0 | 62.0 | 39.0 | 29.0 | 37.6 |
| | | | Structure | Block | Block | Block | Block | Block | Block | Block | Block | Block | Block | Block | Block + Random | Block | Random | Block | Random | Random | Block | Block | Block |
| | | Conjugated diene monomer unit | Type | BD | BD | BD | BD | BD | IP | IP | IP | BD | BD | BD | BD | BD | BD | BD | BD | BD | BD | BD | BD |
| | | | Amount [mass%] | 65.8 | 56.4 | 64.9 | 70.5 | 56.4 | 76.1 | 65.8 | 71.4 | 60.0 | 56.4 | 56.4 | 50.0 | 65.8 | 60.0 | 51.7 | 34.2 | 33.0 | 58.0 | 46.0 | 56.4 |
| | | | Structure | Block | Block | Block | Block | Block | Block | Block | Block | Block | Block | Block | Block + Random | Block | Random | Block | Random | Random | Block | Block | Block |
| | | Hydrophilic monomer unit | Type | MAA | MAA | MAA | MAA | MAA | MAA | MAA | MAA | MAA | MAA | AA | MAA | MAA | MAA | MAA | IA | AA | MAA | MAA | MAA |
| | | | Amount [mass%] | 6.0 | 6.0 | 6.0 | 6.0 | 6.0 | 6.0 | 6.0 | 6.0 | 15.0 | 6.0 | 6.0 | 5.0 | 6.0 | 6.0 | 6.0 | 3.8 | 5.0 | 3.0 | 25.0 | 6.0 |
| | | | Form of salt | $NH_3$ | $NH_3$ | $NH_3$ | $NH_3$ | $NH_3$ | $NH_3$ | $NH_3$ | $NH_3$ | $NH_3$ | $NH_3$ | $NH_3$ | $NH_3$ | Na | $NH_3$ | $NH_3$ | Na | Na | $NH_3$ | $NH_3$ | $NH_3$ |
| | | Median diameter [nm] | | 266 | 278 | 739 | 448 | 376 | 607 | 428 | 470 | 280 | 125 | 293 | 214 | 266 | 158 | 163 | 145 | 144 | 302 | 295 | 960 |
| | Solvent | Type | | Water | Water | Water | Water | Water | Water | Water | Water | Water | Water | Water | Water | Water | Water | Water | Water | Water | Water | Water | Water |
| Film properties of polymer | | THF gel content [mass%] | | 44 | 45 | 55 | 41 | 40 | 44 | 37 | 35 | 49 | 45 | 47 | 58 | 44 | 75 | 30 | 91 | 88 | 46 | 50 | 47 |
| | | Loss modulus G″ [kPa] | | 149 | 1446 | 533 | 6 | 1031 | 20 | 106 | 87 | 1362 | 1490 | 1453 | 1504 | 151 | 1459 | 2303 | 1714 | 1691 | 1432 | 1694 | 1450 |
| | | Loss tangent tan δ [-] | | 0.047 | 0.212 | 0.156 | 0.003 | 0.173 | 0.034 | 0.074 | 0.089 | 0.235 | 0.207 | 0.227 | 0.363 | 0.052 | 0.328 | 0.441 | 0.718 | 0.714 | 0.233 | 0.256 | 0.233 |
| Evaluation | | Stationary stability of binder composition | | A | A | B | A | A | B | A | A | A | A | A | A | A | A | A | A | A | C | A | D |
| | | Initial viscosity of slurry composition | | A | A | A | A | A | A | A | A | B | A | A | A | A | B | A | A | A | C | D | A |
| | | Preservation stability of slurry composition | | A | A | A | A | A | B | B | B | A | A | A | A | C | B | A | A | B | D | A | B |
| | | Normal peel strength of electrode | | A | A | A | A | B | A | A | A | B | A | A | B | A | B | B | C | D | B | C | B |
| | | High-temperature peel strength of electrode | | A | B | A | B | A | B | B | B | B | B | B | B | A | B | C | C | D | B | C | B |
| | | Internal resistance of secondary battery | | A | A | A | A | A | A | A | A | A | B | A | B | A | B | B | C | C | B | B | A |

EP 4 253 440 A1

22

It can be seen from Table 1 that in Examples 1 to 14, it was possible to provide a binder composition for a non-aqueous secondary battery electrode that has excellent stationary stability and can form an electrode having excellent peel strength after exposure to high temperature and a non-aqueous secondary battery having low internal resistance.

It can also be seen from Table 1 that in Comparative Examples 1 to 3 in which the loss modulus G" and the loss tangent tan δ were outside of the ranges according to the present disclosure, it was not possible to sufficiently increase high-temperature peel strength of an obtained electrode and it was not possible to sufficiently reduce internal resistance of an obtained secondary battery.

It can also be seen from Table 1 that in Comparative Examples 4 and 5 in which the used binder composition contained a polymer having a proportional content of hydrophilic monomer units that was outside of the range according to the present disclosure, it was not possible to simultaneously achieve sufficiently increased high-temperature peel strength of an obtained electrode, sufficiently reduced internal resistance of an obtained secondary battery, and increased stationary stability of the binder composition itself.

Moreover, in Comparative Example 6 in which the used binder composition contained a large polymer having a median diameter that exceeded the range according to the present disclosure, it can be seen that high-temperature peel strength of an obtained electrode could not be sufficiently increased, and that stationary stability of the binder composition itself was poor.

Note that for all of the examples and also for Comparative Examples 2 and 3, pressability was evaluated as "good" with regards to "Close adherence of electrode mixed material layer after pressing" and "Rate of density change of electrode after pressing". In contrast, in the case of Comparative Examples 1 and 4 to 6, pressability evaluated according to the aforementioned criteria was not good.

In other words, these evaluation results demonstrate that an electrode for a non-aqueous secondary battery having excellent pressability was obtained through a binder composition for a non-aqueous secondary battery electrode that contained water and a polymer including an aromatic vinyl monomer unit, a conjugated diene monomer unit, and a hydrophilic monomer unit, and in which the polymer had a median diameter of not less than 50 nm and not more than 800 nm, the proportional content of hydrophilic monomer units in the polymer was not less than 3.7 mass% and not more than 20 mass%, and the polymer had a loss tangent tan δ of not less than 0.001 and not more than 0.80 and a loss modulus G" of 1,800 kPa or less.

INDUSTRIAL APPLICABILITY

According to the present disclosure, it is possible to provide a binder composition for a non-aqueous secondary battery electrode that has excellent stationary stability and can form an electrode having excellent peel strength after exposure to high temperature and a non-aqueous secondary battery having low internal resistance.

Moreover, according to the present disclosure, it is possible to provide a slurry composition for a non-aqueous secondary battery electrode that can form an electrode having excellent peel strength after exposure to high temperature and a non-aqueous secondary battery having low internal resistance.

Furthermore, according to the present disclosure, it is possible to provide an electrode for a non-aqueous secondary battery that has excellent peel strength after exposure to high temperature and can form a secondary battery having low internal resistance and also to provide a non-aqueous secondary battery that has low internal resistance.

**Claims**

1. A binder composition for a non-aqueous secondary battery electrode comprising: a polymer including an aromatic vinyl monomer unit, a conjugated diene monomer unit, and a hydrophilic monomer unit; and water, wherein

   the polymer has a median diameter of not less than 50 nm and not more than 800 nm,
   proportional content of the hydrophilic monomer unit in the polymer is not less than 4.0 mass% and not more 20 mass%, and
   the polymer has a loss tangent tan δ of not less than 0.001 and less than 0.40 and a loss modulus G" of 1,600 kPa or less.

2. The binder composition for a non-aqueous secondary battery electrode according to claim 1, wherein the conjugated diene monomer unit included in the polymer is a unit derived from 1,3-butadiene monomer.

3. The binder composition for a non-aqueous secondary battery electrode according to claim 1 or 2, wherein gel content measured when the polymer is immersed in tetrahydrofuran is not less than 35 mass% and not more than 60 mass%.

4. The binder composition for a non-aqueous secondary battery electrode according to any one of claims 1 to 3, wherein the polymer includes an aromatic vinyl block region formed of aromatic vinyl monomer units.

5. A slurry composition for a non-aqueous secondary battery electrode comprising: an electrode active material; and the binder composition for a non-aqueous secondary battery electrode according to any one of claims 1 to 4.

6. An electrode for a non-aqueous secondary battery comprising an electrode mixed material layer formed using the slurry composition for a non-aqueous secondary battery electrode according to claim 5.

7. A non-aqueous secondary battery comprising a positive electrode, a negative electrode, a separator, and an electrolyte solution, wherein at least one of the positive electrode and the negative electrode is the electrode for a non-aqueous secondary battery according to claim 6.

## INTERNATIONAL SEARCH REPORT

| International application No. |
|---|
| **PCT/JP2021/043707** |

**A. CLASSIFICATION OF SUBJECT MATTER**

*C08F 287/00*(2006.01)i; *C08L 53/02*(2006.01)i; *H01M 4/13*(2010.01)i; *H01M 4/139*(2010.01)i; *H01M 4/62*(2006.01)i; *H01M 10/0566*(2010.01)i
FI: H01M4/62 Z; H01M4/139; H01M4/13; H01M10/0566; C08L53/02; C08F287/00

According to International Patent Classification (IPC) or to both national classification and IPC

**B. FIELDS SEARCHED**

Minimum documentation searched (classification system followed by classification symbols)
C08F287/00; C08L53/02; H01M4/13; H01M4/139; H01M4/62; H01M10/0566

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2016/148304 A1 (NIPPON ZEON CO., LTD.) 22 September 2016 (2016-09-22) | 1-7 |
| A | WO 2014/148064 A1 (NIPPON ZEON CO., LTD.) 25 September 2014 (2014-09-25) | 1-7 |
| P, A | WO 2021/220707 A1 (JSR CORP) 04 November 2021 (2021-11-04) | 1-7 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 January 2022** | **25 January 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

International application No.

**PCT/JP2021/043707**

| Patent document cited in search report | | | Publication date (day/month/year) | Patent family member(s) | | | Publication date (day/month/year) |
|---|---|---|---|---|---|---|---|
| WO | 2016/148304 | A1 | 22 September 2016 | KR | 10-2017-0108164 | A | |
| | | | | CN | 107408672 | A | |
| WO | 2014/148064 | A1 | 25 September 2014 | US | 2016/0036055 | A1 | |
| | | | | EP | 2978051 | A1 | |
| | | | | KR | 10-2015-0132156 | A | |
| | | | | CN | 105190967 | A | |
| WO | 2021/220707 | A1 | 04 November 2021 | (Family: none) | | | |

Form PCT/ISA/210 (patent family annex) (January 2015)

**REFERENCES CITED IN THE DESCRIPTION**

**Patent documents cited in the description**

- JP 2017126456 A
- JP 2012204303 A